**Europäisches Patentamt**

**European Patent Office**

**Office européen des brevets**

(19)

(11) Veröffentlichungsnummer: **0 021 081**
**B1**

(12) **EUROPÄISCHE PATENTSCHRIFT**

(45) Veröffentlichungstag der Patentschrift:
**27.04.83**

(51) Int. Cl.³: **G 01 T 1/02, G 01 T 5/10**

(21) Anmeldenummer: **80102962.0**

(22) Anmeldetag: **28.05.80**

(54) Dosimeter zum Nachweis von Radon und/oder Thoron und deren Folgeprodukten.

(30) Priorität: **30.06.79 DE 2926491**

(43) Veröffentlichungstag der Anmeldung:
**07.01.81 Patentblatt 81/1**

(45) Bekanntmachung des Hinweises auf die Patenterteilung:
**27.04.83 Patentblatt 83/17**

(84) Benannte Vertragsstaaten:
**FR GB SE**

(56) Entgegenhaltungen:
HEALTH PHYSICS, Band 16, Nr. 6, Juni 1969, Seiten 800–802 London, G.B. P.H. BEDROSIAN: «Photographic Technique for Monitoring Radon-222 and Daughter Products»
HEALTH PHYSICS, Band 33, Nr. 6, Dezember 1977, Seiten 664–665 London, G.B. N. LOBAO et al.: «Development of a system for the simultaneous determination of Rn-220 und Rn-222 concentration in air, by ionographic detection of alpha particles»
NUCLEAR INSTRUMENTS AND METHODS, Band 109, Nr. 3, 15. Juni 1973, Seiten 537–539 Amsterdam, NL. A.L. FRANK et al.: «A diffusion chamber radon dosimeter for use in mine environment»

(73) Patentinhaber: **Kernforschungszentrum Karlsruhe GmbH, Weberstrasse 5, D-7500 Karlsruhe 1 (DE)**

(72) Erfinder: **Hassib, Gabor, Dr. Dipl.-Phys., Max-Planck-Strasse 2, D-7514 Eggenstein-Leopoldshafen (DE)**
Erfinder: **Piesch, Ernst, Dipl.-Phys., Württembergerstrasse 5, D-7514 Eggenstein-Leopoldshafen (DE)**

SOLID STATE NUCLEAR TRADE DETECTORS (Proceedings of the 9th International Conference, Neuherberg/München, 30. September – 6. Oktober 1976), Band 1, Seiten 285–300 Pergamon Press Oxford, G.B. G. SOMOGYI: «A study of the basic properties of electrochemical track etching»
NUCLEAR INSTRUMENTS AND METHODS, Band 163, Nr. 1, Juli 1979, Seiten 285–287 Amsterdam, NL. A.M. BHAGWAT et al.: «A simple set-up for single surface electrochemical etching (ECE) of charged particle tracks»

## Dosimeter zum Nachweis von Radon und/oder Thoron und deren Folgeprodukten

Die Erfindung betrifft ein Dosimeter zum Nachweis von Radon und/oder Thoron und deren Folgeprodukten mit einer Diffusionskammer, in die das zu untersuchende Gas ausschliesslich durch natürliche Diffusion gelangt und die zwei Stirnseiten aufweist, von denen die eine mittels einer Kernspurdetektorfolie oder eines anderen integrierenden α-Detektors zum Nachweis des Radon- und Thoronzerfalls und der daraus resultierenden Folgeprodukte und die andere mittels eines Radon und/oder Thoron durchlässigen Filters abgeschlossen ist. Ein Dosimeter dieser Art ist aus «Nuclear Instruments and Methods», Bd. 109, 1973, Nr. 3, S. 537–539 bekannt.

Ein wesentlicher Beitrag zur natürlichen Strahlenbelastung ist auf den Einfluss von Radon und/oder Thoron und deren Folgeprodukten zurückzuführen. Diese α-Radionuklide kommen in der freien Atmosphäre vor und gelangen nach einem α-Zerfall als freies Ion bzw. an Aerosolen gelagert in die Lunge. Entsprechend dem Radium- und Thoriumgehalt im Boden und im Baumaterial beträgt die mittlere Inhalationsdosis der Bevölkerung infolge Radon- und Folgeprodukten 775 mrem/Jahr bezogen auf die gesamte Lunge. In geschlossenen Wohnhäusern, vor allem aber in Bergwerken, können unter Umständen das 10- bis 100-fache dieser Lungenbelastung vorkommen. Bei der Messung von Radon- und Folgeprodukten steht man vor der Aufgabe, die Strahlenbelastung vor allem der Folgeprodukte zu ermitteln, da das Edelgas Radon $^{222}$Rn nur kurzzeitig in der Lunge verweilt, während die an Aerosolen angelagerten kurzlebigen Folgeprodukte im Bronchialraum zurückbleiben (die folgenden Tabellen 1 und 2 geben diese Zerfallreihen für Radon und Thoron wieder):

Tabelle 1:

| Name | Isotop | Halbwertszeit | Strahlenart | $E_\alpha$ Mev |
|---|---|---|---|---|
| Radon | $^{222}$Rn | 3.823 d (Tage) | α | 5.49 |
| RaA | $^{218}$Po | 3.05 min | α | 6.00 |
| RaB | $^{214}$Pb | 26.8 min | β,γ | – |
| RaC | $^{214}$Bi | 19.7 min | β,γ | – |
| RaC | $^{214}$Po | 164 µs | α | 7.69 |
| RaD | $^{210}$Pb | 21 a (Jahre) | β,γ | – |

Tabelle 2:

| Name | Isotop | Halbwertszeit | $E_\alpha$ Mev |
|---|---|---|---|
| Thoron | $^{220}$Rn | 55.65 s | 6.29 |
| Th A | $^{216}$Po | 0.15 s | 6.78 |
| Th B | $^{212}$Pb | 10.6 h (Stunden) | – |
| Th C' | $^{212}$Po | 0.3 $^m$s | 8.78 |
| Th C'' | $^{208}$Tl | 3.1 min | – |

Die Messungen von Radon/Thoron und Folgeprodukten erfolgt nach dem derzeitigen Stand der Technik hauptsächlich mit batteriebetriebenen Geräten, die über ein Filter Luft durchsaugen und die am Filter abgeschiedenen Folgeprodukte ausmessen. Hierbei werden verschiedene Verfahren angewandt, bei denen jeweils eine bestimmte Luftmenge durch ein Filter gepumpt wird. Ein Gerät, mit dem diese Untersuchungen durchgeführt werden können, ist z.B. in der US-A-3 922 555 beschrieben. Es weist einen Ventilator auf, der Luft durch ein Filter befördert. Die α-Strahlung der auf dem Filter gesammelten Folgeprodukte des Radon wird dann mittels zweier Kernspurdetektoren, denen Absorber vorgeschaltet sind, nach ihrer Energie selektiv gemessen.

Die Konstruktion entsprechend langzeitig integrierender Radondosimeter beschränkt sich im wesentlichen auf zwei Ausführungsformen. Das aktive Radondosimeter pumpt Luft durch ein Filter und misst insbesondere die α-Teilchen der Zerfallprodukte mit einem Kernspurdetektor.

Bei Verwendung von Kodak LR-115-Zellulose-Nitratfolien können wegen der hohen Absorption der α-Teilchen in Abdeckfolien hinter unterschiedlich dicken Abdeckungen im Kernspurfilm drei verschiedene α-Energiegruppen, nämlich RaA, RaC' und ThC' getrennt nachgewiesen werden.

Die eingangs beschriebene Diffusionskammer lässt Radon durch ein Filter in das Messvolumen ein, in welchem nach etwa 5 Stunden Gleichgewicht zwischen Radon und Folgeprodukten auftritt. Dieses Dosimeter misst im wesentlichen ausschliesslich Radon über die Folgeprodukte, nachdem sich zwischen Radon und den Folgeprodukten ein Gleichgewicht eingestellt hat. Für den Strahlenschutz von Interesse ist jedoch die Ermittlung der Lungenbelastung vor allem durch Folgeprodukte. In einem Wohnraum oder in einem Bergwerk wird infolge Ventilation der Raumluft bzw. Bewetterung des Stollens zwischen Radon und Folgeprodukten kein Gleichgewicht erwartet. Die Messung der Radonkonzentration über die Folgeprodukte in einer Diffusionskammer kann demnach bei ungünstigen Verhältnissen (10% Gleichgewicht) zu einer entsprechenden Überschätzung der Lungenbelastung bis zu einem Faktor 10 führen.

Die der Erfindung gestellte Aufgabe besteht daher darin, ein Dosimeter der im Oberbegriff vorausgesetzten Art so auszubilden, dass es ausser dem Gehalt des überwachten Gases an Radon und/oder Thoron im Gleichgewicht mit deren Folgeprodukten auch dessen Gesamtgehalt an Radon und/oder Thoron sowie deren ggf. nicht im Gleichgewicht vorliegenden Folgeprodukte getrennt erfasst.

Erfindungsgemäss wird diese Aufgabe durch die im kennzeichnenden Teil des Anspruches 1 angegebene Ausbildung gelöst.

Vorteilhafte Ausgestaltungsformen sind in den Ansprüchen 2 und 3 angegeben.

Das erfindungsgemäss ausgebildete Radon/Thoron-Dosimeter arbeitet also ohne Pumpe, wobei ein Kernspurdetektor oder integrierender $\alpha$-Detektor langzeitigen Einsatzes (1 Woche bis 3 Monate) $\alpha$-Teilchen von $^{220}$Rn/$^{222}$Rn und deren Folgeprodukte aus einem definierten Luftvolumen registriert. Im Gegensatz zu den aktiven unter Gasdurchfluss arbeitenden Dosimetern werden also bei dem passiven Dosimeter neben den Folgeprodukten auch $\alpha$-Teilchen von $^{222}$Rn und/oder $^{220}$Rn nachgewiesen, die den Detektor aus den vorgegebenen, gleichen Volumen der Messkammer mit im Aufbau gleicher Geometrie erreichen. Das effektive Volumen, aus dem der Nachweis der $\alpha$-Teilchen erfolgt, wird durch die Reichweite der $\alpha$-Teilchen in Luft bzw. durch die Detektoreigenschaft bestimmt.

Die seither verwendete Methode einer Trennung verschiedener $\alpha$-Energiegruppen basiert auf dem experimentellen Befund, dass die Reichweite von $\alpha$-Teilchen in einer Kernspurdetektorfolie, z.B. in Makrofol-Polykarbonat, durch die $\alpha$-Energie bestimmt wird. Bei konventioneller Ätzung des Kodak LR-115 Detektors werden Ätzgruppen bzw. Kernspuren sichtbar, wenn die dünne rotgefärbte Detektorschicht durchgeätzt wird, so dass bei einer mikroskopischen Auswertung helle Löcher auf rotem Untergrund erscheinen. Zur Absorption der $\alpha$-Teilchen und Diskriminierung verschiedener $\alpha$-Energiegruppen wird daher die Detektorfolie in bekannter Weise mit unterschiedlich dicken Kunststoff-Folien abgedeckt.

Diese Methode kann durch eine chemische Vorätzung der Detektorfolie nach Bestrahlung verbessert werden, wobei ein erheblicher Teil der der $\alpha$-Teilchenreichweite entsprechenden Schichtdicke schon vor dem eigentlichen Ätzvorgang zur Sichtbarmachung der Kernspuren abgelöst wird. Erst bei einer anschliessenden elektrochemischen Ätzung werden Kernspuren sichtbar.

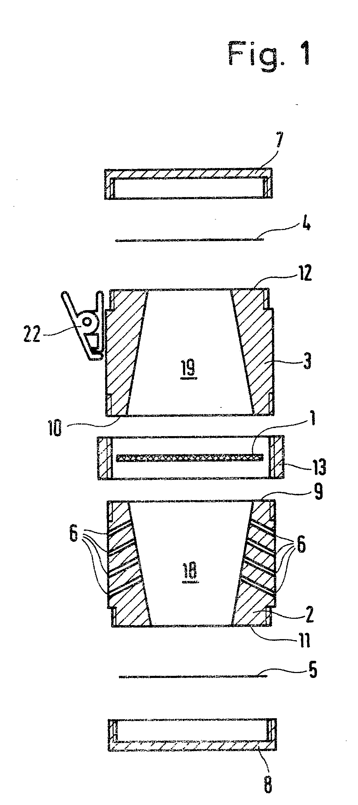

Die Erfindung wird im folgenden anhand eines Ausführungsbeispiels und der Figuren 1 bis 3 näher erläutert, wobei insbesondere die Fig. 1 ein Dosimeter in auseinandergezogener Darstellung zeigt.

Das in Fig. 1 dargestellte passive Dosimeter besteht aus einer Kammer 3 und einer im Aufbau identischen, seitlich geöffneten Kammer 2, in welche Radon/Thoron mit dem jeweiligen Anteil an Folgeprodukten durch Bohrungen oder Schlitze 6 eintreten kann.

Beide Kammern 2 und 3 weisen aussen eine zylindrische Form und innen eine kegelstumpfförmige Ausnehmung 18 und 19 auf. Die Kegelstumpfseiten mit geringerem Durchmesser (Kegel wegen Strahlung, ausgehend von Folgeprodukten, die sich auf der Innenwand ablagern) sind den Kernspurdetektorfolien 4 bzw. 5 zugewandt, die die beiden Stirnseiten 12 bzw. 11 der Kammer 3 bzw. 2 auf der einen Seite abschliessen. Gehalten werden die Kernspurdetektorfolien 4 und 5 mittels Kappen 7 und 8, welche auf entsprechende Gewinde der Kammern 2 und 3 aufgeschraubt werden können.

Die Kegelstumpfseiten mit grösserem Durchmesser sind einem gemeinsamen Filter 1 zugewandt, wobei die Stirnseite 9 und 10 der Kammern 2 und 3 auf jeweils einer der Seiten des Filters 1 zur Auflage kommen. Das Filter 1 ist nur für Radon/Thoron durchlässig; nicht jedoch für Aerosole usw. Beide Kammern 2 und 3 werden mittels eines Schraubenverschlusses 13 (Ring mit Innengewinde und entsprechende Aussengewinde im Bereich der Stirnseite 9 und 10 der Kammern 2 und 3) unter Zwischenlage des Filters 1 aneinandergepresst.

Die Wandung der zweiten Kammer 2 weist Bohrungen oder Schlitze 6 auf, die zur Oberfläche des Filters 1 hingerichtet sind. Durch sie diffundiert das Gas mit dem Radon/Thoron und deren Folgeprodukte in die Kammer 2 hinein. Das passive Dosimeter 2, 3 kann mit einem Clipp 22 versehen sein, mit dem es an Kleidung oder dgl. befestigbar ist.

Durch das Fiberglasfilter 1 diffundiert dann ausschliesslich Radon/Thoron in die Kammer 3 ein, während sich die im auszumessenden Gas befindenden Folgeprodukte auf dem Filter 1 und nur an der Innenseite von Kammer 2 niederschlagen. Nach längerer Zeit wird in Kammer 3 das hereindiffundierte Radon/Thoron mit ihren neu entstandenen Folgeprodukten im Gleichgewicht stehen. Dasselbe Gleichgewicht stellt sich auch für den Radon/Thoron-Anteil in Kammer 2 ein. Die Kernspurdetektorfolien 5 und 4 werden daher folgende $\alpha$-Teilchen nachweisen:

Kammer 2: Rn-Zerfall und daraus resultierende Folgeprodukte und Anteil der Folgeprodukte in der Luft (Gas).

Kammer 3: Rn-Zerfall und daraus resultierende Folgeprodukte.

Aus der Differenz der Detektoranzeigen der Kernspurdetektorfolien 5 und 4 kann der Anteil der in der Atmosphäre vorliegenden Folgeprodukte getrennt von einem Radoneinfluss ermittelt werden. Die Rn-Konzentration ergibt sich aus der Direktanzeige der Folie 4. Damit wird der Messeffekt durch Rn unterdrückt, der bei einem aktiven Dosimeter nicht auftritt. Die konische Innenform der Kammern 2 und 3 verringert den Einfluss von Folgeprodukten, die sich an den Seitenwänden absetzen (gleicher Anteil in Kammer 3 und 2).

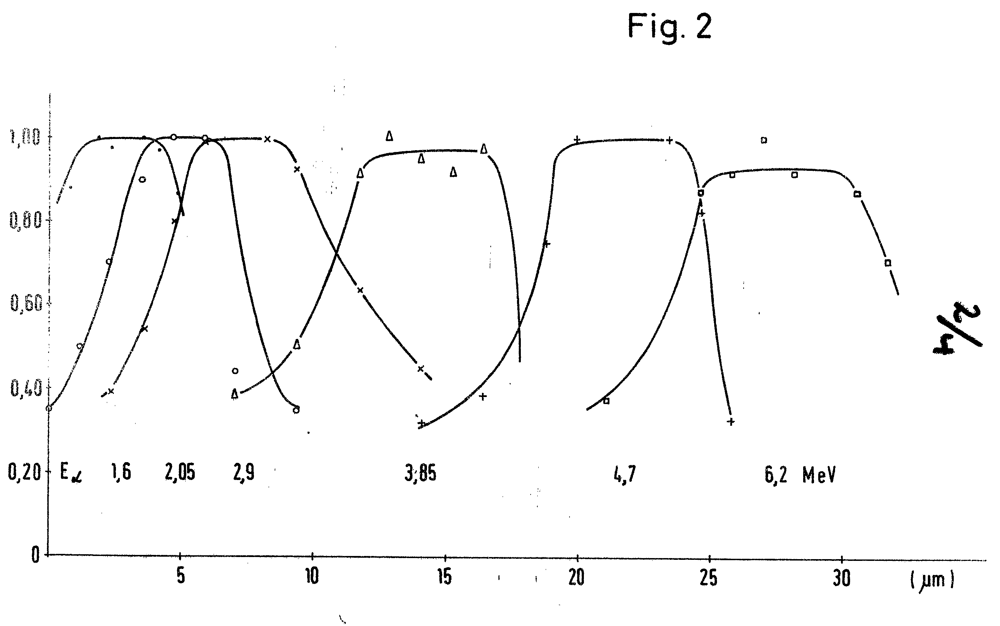

Die Verhältnisse bei der üblichen Auswertung der Kernspurdetektorfolien 4 und 5 sind in Fig. 2 (relative, optische Dichte, aufgetragen gegen abgetragene Schichtdicke in μm für Energie Eα in MeV, bei einer Vorätzung mit $C_2H_5OH$ und 6N KOH im Volumenverhältnis 4:1, Raumtemperatur) für eine elektrochemische Nachätzung in z.B. Makrofol nach erfolgter Vorätzung dargestellt. Die Nachätzung erfolgt z.B. mit 20% Alkohol in 5N KCH, einer elektrischen Spannung von 800 $V_{eff}$, Frequenz 2 kHz, bei Raumtemperatur über 4 Stunden.

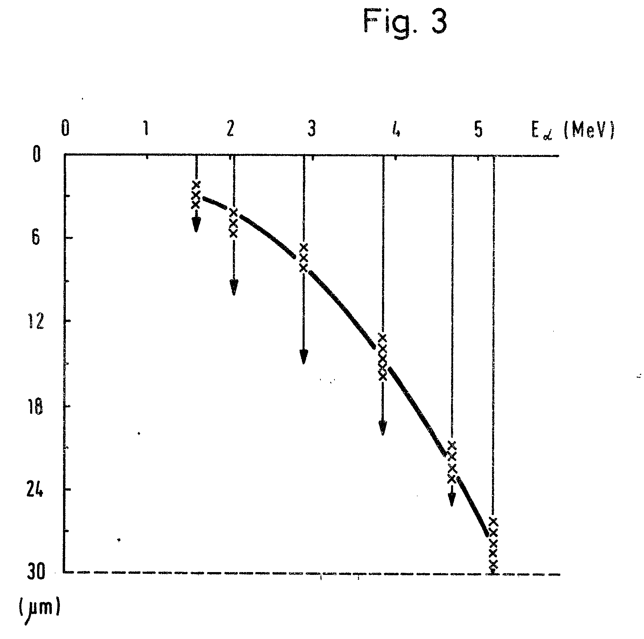

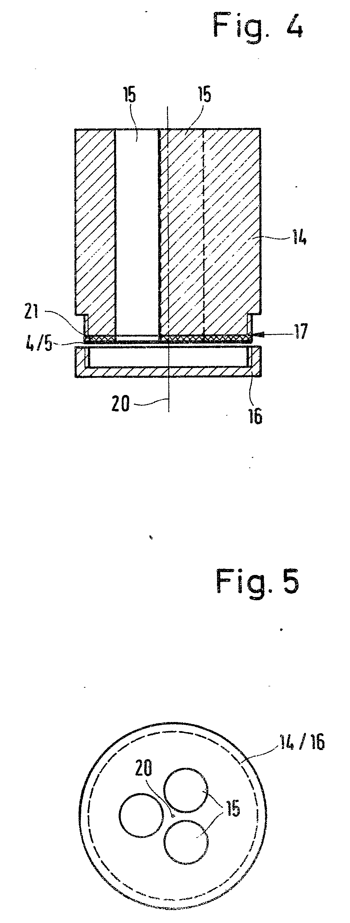

Die Fig. 3 zeigt nochmals die α-Reichweiten (Pfeillängen) in μm in Abhängigkeit von den Energien $E_α$ im z.B. Makrofol. Die Pfeile gehen von der Oberfläche der Kernspurdetektorfolien 4 bzw. 5 aus; der nach der elektrochemischen Nachätzung sichtbare Teil der Kernspuren ist mit Kreuzchen markiert (frontaler Einfall der Teilchen).

Die Anwendung einer konventionellen Vorätzung führt zu einer gezielten Entfernung der Oberflächenschicht. Die Ätzdauer kann auf die entsprechende α-Energie bzw. den entsprechenden α-Strahler abgestimmt werden. Einige interessante Verhältnisse für Folgeprodukte sind in der folgenden Tabelle 3 aufgestellt.

Tabelle 3:

| Isotope | entfernte Detektorschicht in μm | Vorätzungszeit in Stunden |
|---------|--------------------------------|---------------------------|
| Ra A  | 8.4  | 3.56  |
| Ra C' | 15.0 | 6.36  |
| Th C' | 25   | 10.60 |

**Patentansprüche**

1. Dosimeter zum Nachweis von Radon und/oder Thoron und deren Folgeprodukten mit einer Diffusionskammer (3), in die das zu untersuchende Gas ausschliesslich durch natürliche Diffusion gelangt und die zwei Stirnseiten aufweist, von denen die eine (12) mittels einer Kernspurdetektorfolie (4) oder eines anderen integrierenden α-Detektors zum Nachweis des Radon- und Thoronzerfalls und der daraus resultierenden Folgeprodukte und die andere (10) mittels eines für Radon und/oder Thoron durchlässigen Filters (1) abgeschlossen ist, gekennzeichnet durch eine zweite, der Diffusionskammer (3) im Aufbau entsprechende Kammer (2), deren eine Stirnseite (9) von der der Diffusionskammer (3) abgewandten Seite des Filters (1) und deren zweite Stirnseite (11) von einer weiteren Kernspurdetektorfolie oder einem anderen integrierenden α-Detektor (5) abgeschlossen ist und durch Öffnungen (6) in der zweiten Kammer (2), durch die das auszumessende Gas mit Radon und Thoron und deren Folgeprodukten in die zweite Kammer (2) hineintritt.

2. Dosimeter nach Anspruch 1, dessen Diffusionskammer eine Kappe aufweist, mit der die zugehörige Kernspurdetektorfolie befestigt ist, dadurch gekennzeichnet, dass die beiden Kammern (2 und 3) unter Zwischenlage des Filters (1) miteinander verbunden sind, und dass auch die Kernspurdetektorfolie oder der andere integrierende α-Detektor (5) der zweiten Kammer (2) mittels einer Kappe (8) an der Stirnseite der Kammer (2) befestigt ist.

3. Dosimeter nach einem der Ansprüche 1 oder 2, dadurch gekennzeichnet, dass die Öffnungen schräg zum Filter (1) verlaufende Bohrungen oder Schlitze (6) sind.

**Revendications**

1. Dosimètre pour la détection de radon et/ou de thoron et de leurs produits dérivés, comportant une chambre de diffusion (3), dans laquelle le gaz à examiner arrive exclusivement par diffusion naturelle, et qui présente deux faces frontales dont l'une (12) est fermée au moyen d'une feuille formant détecteur (4) des traces nucléaires ou d'un autre détecteur α intégrateur pour la détection des produits de la désintégration du radon et du thoron et des produits dérivés qui en résultent, l'autre (10) étant fermée au moyen d'un filtre (1) perméable au radon et/ou au thoron, dosimètre caractérisé en ce qu'il est prévu une seconde chambre (2) dont la construction correspond à celle de la chambre de diffusion (3), dont une face frontale (9) est fermée par la face du filtre (1) qui est à l'opposé de la chambre de diffusion (3), et dont la seconde face frontale (11) est fermée par une autre feuille détecteur de traces nucléaires ou par un autre détecteur α (5) intégrateur, le gaz contenant du radon et du thoron, que l'on doit mesurer, ainsi que leurs produits dérivés, pénétrant dans la seconde chambre (2) par des ouvertures (6) de la paroi.

2. Dosimètre suivant la revendication 1, dont la chambre de diffusion présente un chapeau qui permet de fixer la feuille servant de détecteur de traces nucléaires afférente, caractérisé en ce que les deux chambres (2 et 3) sont reliées ensemble avec interposition du filtre (1), et qu'aussi la feuille servant de détecteur de traces nucléaires ou l'autre détecteur α intégrateur (5) de la seconde chambre (2) est fixé sur la face frontale de cette seconde chambre (2) au moyen d'un chapeau (8).

3. Dosimètre suivant l'une des revendications 1 et 2, caractérisé en ce que les ouvertures sont des perforations ou des fentes (6) qui s'étendent obliquement vers le filtre (1).

**Claims**

1. Dosemeter for the detection of radon and/or thoron and their daughter products with a diffusion chamber (3) which the gas to be investigated enters solely through natural diffusion and which has two front faces, one of them (12) sealed by means of a nuclear track detector foil (4) or another integrating α-detector for detecting the radon and thoron decay and the resulting daughter products, and the other (10) by means of a filter (1) permeable to radon and/or thoron, with a second chamber (2) similar in design to the diffusion chamber (3) and whose front face (9) is sealed by the face of the filter (1) turned away from the diffusion chamber (3) and the second front face (11) by another nuclear track detector foil or another integrating α-detector (5), and with openings (6) in the second chamber (2) by which the gas to be measured enters the second chamber (2) together with radon and thoron and their daughter products.

2. Dosemeter as claimed in 1 whose diffusion chamber is provided with a cap by which the associated nuclear track detector foil is fastened, with the two chambers (2 and 3) interconnected and the filter (1) lying in between, and with the nuclear track detector foil or the other integrating α-detector (5) of the second chamber (2) likewise fastened to the front face of the chamber (2) by means of a cap (8).

3. Dosemeter as claimed in 1 or 2 with the openings being bores or slits (6) running in an obligue direction with respect to the filter (1).

¼

# Fig. 1

Fig. 2

Fig. 3

1/4

## Fig. 4

## Fig. 5